# EUROPÄISCHE PATENTANMELDUNG

(11) **EP 1 500 319 A1**
(43) Veröffentlichungstag der Anmeldung: **26.01.2005**
(21) Anmeldenummer: 04450150.0
(22) Anmeldetag: 20.07.2004
(51) Int. Cl.: A01B 45/02

(54) **Bodenbearbeitungsgerät zur schonenden Lockerung von pflanzlich kultivierten Bodenflächen**

(30) Priorität: 21.07.2003 AT 11372003
(71) Anmelder: Winterleitner, Otto. Ing, 8073 Feldkirchen (AT)
(72) Erfinder: Winterleitner, Otto. Ing, 8073 Feldkirchen (AT)

(57) **Zusammenfassung**

Bodenbearbeitungsgerät zur Lockerung verfestigter Untergründe von Rasen- und Wiesenflächen, welches die bepflanzte Bodenschicht samt den darunter liegenden Wurzelschichten lockert, unterlüftet und hebt (15). Dies geschieht durch spezielle rotierende Werkzeuge (2) ((Messer (12), Schneidscheibenabschnitte (16)), welche den Boden mit tiefen senkrechten Schnitten abschnittsweise teilen, seitlich durch Werkzeuge (13) oder Werkzeugabschnitte (17) komprimieren und festhalten und den so fixierten Bodenabschnitt anheben. Nach dieser Hubphase wird das angehobene Bodenmaterial (15) durch einen höhenveränderlichen Abstreifschuh (8) aus der Fixierung durch die Messer (13) gelöst. Schneiden, Komprimieren, Halten und Abstreifen wiederholen sich zyklisch, während das Bodenbearbeitungsgerät in einer Richtung parallel zur Oberfläche und normal zur Rotationsachse (14) fortbewegt wird. Die Kulturschicht bleibt nach diesem vertikalem Hub mit Ausnahme der Schnittlinien erhalten.

Des Weiteren erstreckt sich die Erfindung auf Komponenten, Baugruppen oder Zubehör-Teile zur funktionellen Adaption existierender Geräte mit dem Zweck der Erlangung gleicher Funktionalität wie das geschützte Gerät sowie auf das wirkende Verfahren selbst. Die Anwendung dieses Bodenbearbeitungsgerätes ermöglicht schonende rasche Auflockerung von verfestigten, harten, oder ausgetrockneten Grünflächen (Rasen, Sportplätze, Golfplätze). Der Boden wird weicher, der Bewuchs regeneriert. Die Nutzungspausen von solchermaßen behandelten Kulturflächen werden kürzer.

## Beschreibung

Die vorliegende Erfindung betrifft ein Bodenbearbeitungsgerät zur schonenden Lockerung von pflanzlich kultivierten Bodenflächen, wie Rasen, Zierrasen, Gärten, Wiesen und dergleichen, das zwei oder mehr Schneidwerkzeuge aufweist die auf mindestens einer rotierenden Welle angebracht sind. Diese Werkzeuge schneiden parallel zueinander in den Boden ein. Die Schneidwerkzeuge sind Schneidmesser, die paarweise im Abstand voneinander rotieren. Dabei sind die Schnittflächen im Wesentlichen parallel zur Rotationsrichtung orientiert.

Die Erfindung erlaubt eine regenerative Bearbeitung von kultivierten Bodenflächen. Dabei wird die Kulturschicht aus Humusboden, Grünpflanzen (Rasenpflanzen, Wiesenpflanzen, Blumen) und Kleinlebewesen durch minimal schädigende und maximal nützliche mechanische Bearbeitung behandelt. Die Bearbeitung bewirkt eine flächige Lockerung des Bodens durch Heben der Grasnarbe um einige Zentimeter. Dadurch wird der Boden in vertikaler Richtung entkomprimiert. Verfestigungen die durch Benützung (Begehung, Befahrung, aufgestellte Schwimmbecken, Zelte, Bänke, Tische, etc.) oder Absitzung aufgrund der Witterung entstanden sind, werden wieder gelockert, ohne den Boden umzugraben, zu pflügen oder zu eggen. Die Kulturschicht bleibt erhalten. Der Einsatz von neuem Saatgut, Humuserden, oder Dünger wird stark reduziert. Eine rasche Wiederbenützung ist möglich, was besonders für Sportanlagen von Bedeutung ist. Erfindungsgemäß wird dies dadurch erreicht, dass auf den einander zugekehrten Hauptflächen jeweils zweier benachbarter Schneidmesser einander zugeordnete Erhebungen angebracht oder ausgestaltet sind, wodurch eine seitliche Kompression auf das bearbeitete Material erfolgt. Alternativ oder ergänzend können die einander benachbarten Schneidmesser jeweils einander zugeordnete Abschnitte mit zur übrigen Oberfläche der Messer-Hauptflächen unterschiedliche OberflächenBeschaffenheit oder Reibungswirkung aufweisen, wodurch die Haftung des Bodenmateriales zwischen den rotierenden Messern begünstigt wird. Das Bodenmaterial wird dadurch im Rücklauf der Schneidwerkzeuge nach oben bis zu einer definierten Hubbegrenzung mitgezogen.

Bodenbearbeitungsgeräte zur Pflege von Rasen- oder Grünflächen gibt es nur einige wenige, die von ein paar Dutzend Herstellern in meist ähnlicher Form erzeugt und angeboten werden. Neben einigen handbetätigten Gartengeräten wie Rechen (Harken), Grubber, Hacken, Spaten, Schaufeln, Sähilfen, Rasenkantenschere, zählen Rasenmäher oder Rasentraktor, Vertikutierer, Rasentrimmer und/oder Motorsense zu den üblicherweise verwendeten motorisierten Pflegegeräten. Die Funktionalität dieser Geräte unterscheidet sich in eindeutiger Weise vom Gegenstand der Erfindung, zur Dokumentation des Standes der Technik sei sie im folgenden kurz beschrieben.

Vertikutierer beseitigen durch rotierende Stahlfedern oder Federstahl-Messer (gezackte Schneidscheiben, Rasenbelüfter-Messer) den Rasenfilz, eine Filzschicht, die aus Moosen, abgestorbenen Gräsern, Wurzeln und Unkräutern besteht. In dieser Schicht - sie wirkt wie ein Schwamm - wird das Regenwasser mit den vom Rasen benötigten Nährstoffen festgehalten und dem Rasen vorenthalten. Licht und Luft können nicht bis zum Boden vordringen. Dadurch wurzelt der Rasen flach und wird in Trockenperioden schnell braun und unansehnlich.

Grundsätzlich kann der Rasenfilz auch durch eine Harke (Rechen, Federrechen) mit einigem Kraftaufwand beseitigt werden.

Vertikutierer schneiden senkrecht in den Boden oder kratzen, harken oder durchkämmen die Filzschicht mittels gespannter Edelstahl-Federn. Angetrieben wird die Welle mit den Federn oder Messern von einem Elektro- oder einem Benzinmotor. Beim Schneiden wird die Schnitttiefe entweder über die Verstellung der Räder oder die Veränderung der Höhe der Messerwelle eingestellt. Typische Schnitttiefe in den Boden ist 3 bis 5 mm. Durch die flachen Schnitte des Vertikutierers wird es dem Gras ermöglicht, neue Wurzeln zu bilden. Die Filzschicht und flachwurzelnde Unkräuter werden rasenschonend entfernt. Die flachen Mooswurzeln werden mit dem Vertikutiermesser entfernt, ohne die tiefer liegenden Graswurzeln zu beschädigen. Das Vertikutiergut wird in einem Fangsack gesammelt oder abgelegt. Vertikutierer werden auch in kombinierten Geräten angeboten, als Aufsätze zu Rasenmähern (Lüfterwalzen), oder in Geräten zum Vertikutieren und zum Kehren. Einige Patente existieren zu Systemen mit harkenden Stahlfedern: DE10043959A1, DE10141537C1, GB68923436T2, US3007532 weiters gibt es Schutzrechte für Anwendungen mit rotierenden Messern unter. US1370219, US1742563, oder ein Gerät mit alternativ verwendeter rotierender Messerscheibe oder Stahlfedern unter US4802536, schließlich sei noch ein multifunktionelles Rasenkultiviergerät erwähnt DE4802536A. Alle erwähnten Patente bearbeiten im Gegensatz zur gegenständlichen Erfindung die oberste Schicht des Bodens durch Beseitigung des Rasenfilzes bis in eine Tiefe von wenigen Millimetern ohne in die Tiefe zu schneiden.

Kraftharken erlauben den Einsatz von Rasenmähern zur Vertikutierung des Bodens durch Federn auf einem Balken anstelle des Schneidmessers, welche in kreisender Bewegung den Rasenfilz aufrechen (harken). Daneben gibt es auch Rasenmäher, die vertikal schneiden und gleichzeitig mit dem Rasenschnitt, die Rasenfläche vertikutieren.

Motorhacken wurden und werden gebaut, um den Spaten zu ersetzen. Sie können aber noch mehr, z.B. Unkraut jäten, den Boden lockern oder zur Saat vorbereiten. Der Rasen wird durch Motorhacken jedoch zerstört, da der Boden richtig umgehackt wird. Die Technik der Maschinen ist relativ einfach: Ein Motor treibt über einen Keilriemen oder Zahnräder die Hackmesser mit Hacksporn an, mögliche Zusatzgeräte: Pflug, Grubber oder Häufler. Neu sind pneumatische Steuerungen für das Ein- und Auskuppelns der Antriebskomponenten. Manche Hersteller von Motorhacken bieten auswechselbare Zubehörteile zum Rasenlüften, oder mit Hacksätzen, mit verschieden geformten Messersternen, mit Rasenreinigern (rotierende Stahlfedern), einem Kantenschneider oder mit Eggenscheiben an, die anstelle der Hackmesser angebracht werden können und verschiedene Bearbeitungen des Bodens erlauben. Hierzu zählt auch der Tiefenlüfter-Teil der von Honda angeboten wird. Auch ein tief schneidender Sodenschneider-Aufsatz ist erhältlich. Zum leichteren Transport oder zur besseren Führung gibt es anbringbare oder angebrachte Transporträder. Motorhacken werden mit einer bis drei Räder mit oder ohne Antrieb gebaut. Die Verkleinerung der Motorhacke ist die wichtigste Neuerung. Elektro- oder Benzinmotor, Schneckengetriebe, ca. 30 cm Arbeitsbreite und niedriges Gewicht sind die Kennzeichen.

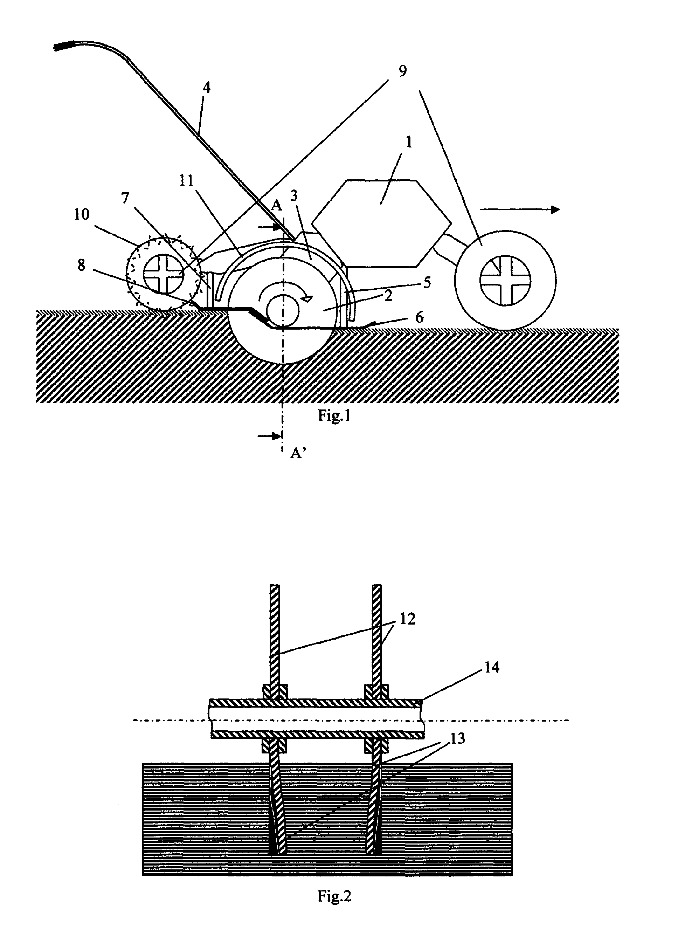

**EP 346 255 A** stellt eine Bodenbearbeitungsmaschine mit Scharen zum Anheben des Bodens sowie Bodenbearbeitungswerkzeugen die laut Fig.2 ein Umgraben des Bodens zur Folge haben, und wo im Wesentlichen die Reinigungswerkzeuge zum Ablösen des Umpflügmaterials vom Bodenbearbeitungswerkzeug vorgesehen sind. Der Erfindungsgegenstand erlaubt die schonende Bodenhebung, ohne Zerbröseln oder Umwühlen der Kulturschicht durch Schneiden, Pressen, und Heben aufgrund der Schneid-Werkzeuge und deren Anordnung zueinander.

**WO 1988/3746** zeigt ein Arbeitsgerät mit einer Klinkenform deren Klingen-Ende die Bodenfläche zerbröselt.

**DE 32 39 469 A 1** beschreibt eine Vorrichtung zum Einschneiden von Rillen zur Saateinbringung in den Boden. Die Klingen haben spezielle konkave Vertiefungen, welche die Ausbringung des Aushubes aus den Rillen erleichtert. Der Vorschub in dieser Erfindung ergibt sich aus der Abrollbewegung, welche ein Einstanzen der Messer bewirkt.

Die Drehzahl der gegenständlichen Erfindung ist höher als die Abrollgeschwindigkeit. Die Formgebung und Oberflächengestaltung der Messer an den Hauptflächen zieht ein seitlich zwischen Messerpaaren befindliches Erdstück aufgrund der Reibung und Kompression und aufgrund der Rotation aus dem umgebenden Bodenmaterial nach oben.

**US 5 573 069 A** stellt eine Motorhacke dar, deren Klingenform den Boden aufgräbt und zerbröselt.

Rasentrimmer oder Freischneider sind handliche Geräte ohne Räder, welche mit rotierendem Messern (Zahnblättern, Dickichtmessern, Grasschneideblättern) oder Fadenköpfen (mit Nylonfaden) das Gras auch an weniger zugänglichen Stellen schneiden.

Die Scheibenegge mit ihren gebogenen, scharfkantigen Stahlscheiben kommt hauptsächlich in der Landwirtschaft zur Saatbettbereitung zum Einsatz. Damit werden beispielsweise Pflanzenreste der Ernte und Unkraut in den Boden eingearbeitet. Durch diese Maßnahme werden die Bodendurehluftung und die Fähigkeit zur Wasseraufnahme verbessert, der Boden wird eingeebnet und verfestigt. Die Pflanzenschicht wird aber zerstört oder stark beschädigt, da die Abrollrichtung der Eggen zumeist nicht in Vorschubrichtung sondern schräg dazu verläuft. Hier sei auch der Furchen- und Dämmschneidformer Patent DE19522821A1 erwähnt.

Nahezu alle gängigen Verfahren arbeiten daher entweder oberflächlich (Mähen, Schneiden, Sensen) und wurzelschonend bis in maximal wenige Millimeter Bodentiefe (Vertikutieren, Belüften), oder aber in die Tiefe von einigen Zentimetern, wobei jedoch die (wenn auch häufig in erbärmlichen Zustand befindliche) Rasenkulturschicht zerstört wird und ein Wiederbenützen frühestens ein paar Monate nach Neueinsaat erfolgen kann.
Anders verhält es sich mit Aerifizier-Geräten. Diese stechen Löcher in den Boden oder schneiden kreisrunde Bodenstücke aus. Die Löcher werden dann meist mit Sand gefüllt. Dadurch kann wieder Luft und Wasser zu den Rasenwurzeln gelangen. Es gibt Aerifizier-Stiefel mit vielen Stösseln, Aerifiziergeräte mit auf Walzen aufgebrachten hohlen oder massiven Spunden, oder
Stechmessern, die mehrere Zentimeter tief in den Boden stechen. Der Lockerungseffekt dieser Werkzeuge ist jedoch geringer als beim Erfindungsgegenstand, da ein Heben der gesamten Bodenschicht nicht beabsichtigt oder kontrolliert durchgeführt wird. Patente mit Stechbolzen sind DE68923436, US3022834, US3878899.

Sodenschneider tragen Kulturschichten des Bodens zentimeterdick ab, um sie für gewöhnlich an anderer Stelle wieder aufzubringen. Dabei wird zum Beispiel ein fertig kultivierter Rasen in transportgerechter Breite seitlich tief eingeschnitten und durch ein Schneidblech horizontal knapp unterhalb der Wurzelschicht abgehoben und für den Transport aufgerollt. Mit solch einem Gerät ist es prinzipiell denkbar, die vom Gegenstand dieser Erfindung beschriebenen Aufgaben zu bewerkstelligen, wenn der durch den Sodenschneider abgetragene Rasen anschließend wieder auf die ursprüngliche Fläche abgerollt wird. Eine Bodenlockerung wird aber durch den Horizontalschnitt in diesem Falle kaum erzielt. Es müsste zusätzlich der Boden nach dem Sodenschnitt durch Hacken (Motorhacken), Eggen, Pflügen, Harken und dgl. gelockert werden, bevor der "Fertig-Rasen" wieder an seinen Ursprungsplatz gelegt wird.

Eine besondere Lösung derselben technischen Aufgabe ist in diesem Zusammenhang vom Japaner Tsurubi Manabu unter "Cultivator for Lawn Grass" Pat. JP 08000011A Int. Kl. A01B 45/00, 45/04 beschrieben. Dieses Gerät mäht den Rasen, hebt ihn auf, führt ihn über ein Schutzblech unter welchem Bodenhacken den Boden leicht aufgraben, und drückt ihn danach wieder auf den gelockerten Boden. Mähen und Bodenlockern wird dadurch mit einem Gerät in einem Arbeitsgang ermöglicht.

Das Bodenschlitzgerät der Fa. Agritec WAM GmbH in Deutschland hat spiralförmig um eine horizontale Welle angeordnete Messer, die bis zu 9 cm senkrecht in den Boden hinein schneiden. Der Messerabstand beträgt 4,5 oder 7,5 cm. Es handelt sich dabei nach Angaben des Herstellers um ein Traktorzubehörgerät zur Regeneration von ausgedünnten, verhärteten Rasenflächen, wie in Parkanlagen, auf Sportplätzen und in Golfanlagen. Die Schlitzmesser brechen dabei die verhärtete Oberfläche auf, sodass Wasser und Sauerstoff wieder in den Boden gelangen kann. Die Anzahl der Messer und deren geringer Abstand bewirkt allerdings auch hier eine starke Zerstörung von Wurzeln und Nutzschicht. Eine Bodenanhebung wird auch hier nicht vorgenommen.

Die Verbesserungen durch die gegenständliche Erfindung gegenüber dem Stand der Technik sind somit gegeben durch die schonende aber effiziente Lockerung des kultivierten Bodenuntergrundes durch die kombinierte Anwendung von
1. parallelem vertikalem Tiefenschnitt mit geringer Wurzelverletzung zwischen den Schnittflächen,
2. Anhebung des Sodenmateriales (Grasnarbe, Kulturschicht inklusive Humus- und Wurzelgrund) unter sanftem Seitendruck
3. Vertikale Bodenlockerung und Aufbrechen von Verhärtungen in der Bodenoberfläche durch die Druck- und Schubspannungen
4. der vorgewählten Hubposition bei minimaler Verletzung des Kulturgutes (Rasens) durch einen Abstreifschuh.
Dadurch kommt Luft (Sauerstoff, Stickstoff) und mehr Platz (für verbessertes Wurzelwachstum, und Bodenleben) in die Pflanzenschicht bis zu den Tiefenwurzeln der Gräser, der Boden wird vertikal lockerer, weicher und dadurch angenehmer im Begehen. Das pflanzliche Gedeihen wird gefördert. Neben Luft gelangt auch nährstoffreiches Regenoder Gießwasser wieder leichter in die Wurzelschicht des Bodens, Düngemittel können eingespart werden. Eine Kombination mit einem Vertikutieraufsatz kann die gleichzeitige Belüftung, Beseitigung des Rasenfilzes und Re-Aktivierung des Bodens an der Oberseite der Kulturschicht ermöglichen.

Der Erfindungsgegenstand ist zur Nutzung durch den Hobby- und Freizeitgärtner gleichermaßen geeignet wie für den professionellen Gärtnereinsatz.

Einfache und sichere Handhabung ermöglichen eine rasche und effiziente Regeneration der verhärteten Böden auch für den Nicht-Fachmann, wodurch sich das Anwendungsgebiet des Bodenlockerungsgerätes als Leih- oder Investitionsobjekt anbietet.

Anwendungsbereiche sind Zierrasen, Gärten, Parks, Spielplätze (öffentlich, in Kindergärten und bei Schulen), Sportplätze wie Fußballstadien/-plätze, Rasen-Tennisplätze, Freibäder (Liegewiesen), Golfanlagen, Freizeitparks, Vorgärten, städtische Begrünungen, Rasenstreifen aber auch Wiesen, Weiden und Felder mit schleppendem Anwuchs (z.B. nach Dürreperioden). Weiden und Koppeln die durch die Fressperioden der Weidetiere (Kühe, Schafe, Ziegen, Pferde, Schweine) oft stark in Mitleidenschaft gezogen wurden (abgefressene Grasnarben, niedergetrampelter, komprimierter Boden) erfahren durch das Bodenlockerungsgerät
eine rasche Erholung, während die Tiere in anderen Weidebereiche sind. Dadurch kann Weideland ökonomischer bewirtschaftet werden.

Es hat sich gezeigt, dass mit dem erfindungsgemäßen Gerät (Prototyp) eine Verbesserung der Vegetation bereits 6-9 Tage nach der Bodenbearbeitung sichtbar wird. Das macht sich auch für professionell genutzte Sportanlagen (Fußballplätze) bezahlt, da eine wesentlich raschere Wiederbenützung mit geringen Kosten erzielt wird als mit herkömmlichen Methoden, wo mit Ausnahme von restaurative Maßnahmen wie durch Aufbringung von Fertigrasen, eine Benützung erst nach mehreren Wochen bis Monaten möglich ist.

Durch die unterschiedlich einstellbare Hubhöhe lassen sich kurzfristig auch geringe Niveau-Unterschiede ausgleichen. Dadurch wird die optische Erscheinung der Bodenflächen verbessert. Kleine Hügel (Aufwerfungen), Gräben, Unebenheiten, Furchen oder Rinnen können durch die Erfindung vollständig beseitigt werden. Dies wird durch unterschiedliche Förderung des Wurzelwachstums erreicht.

Die vorliegende Erfindung wird anhand der nachfolgenden Figuren erläutert. Es zeigen
**Fig.1** die Skizzierung des erfindungsgemäßen Bodenbearbeitungsgerätes und dessen Funktion.
**Fig.2** zeigt einen Schnitt A-A' durch die Schneidwerkzeugachse aus Fig.1.
**Fig.3** zeigt die typische Veränderung des Bodenprofils durch den Bearbeitungsvorgang
**Fig.4** bis **Fig. 7** zeigen Beispiele von Werkzeugformen zur Bewirkung der erfindungsgemäßen Schneid-, Komprimier-, und Hubfunktion zur Bodenlockerung.

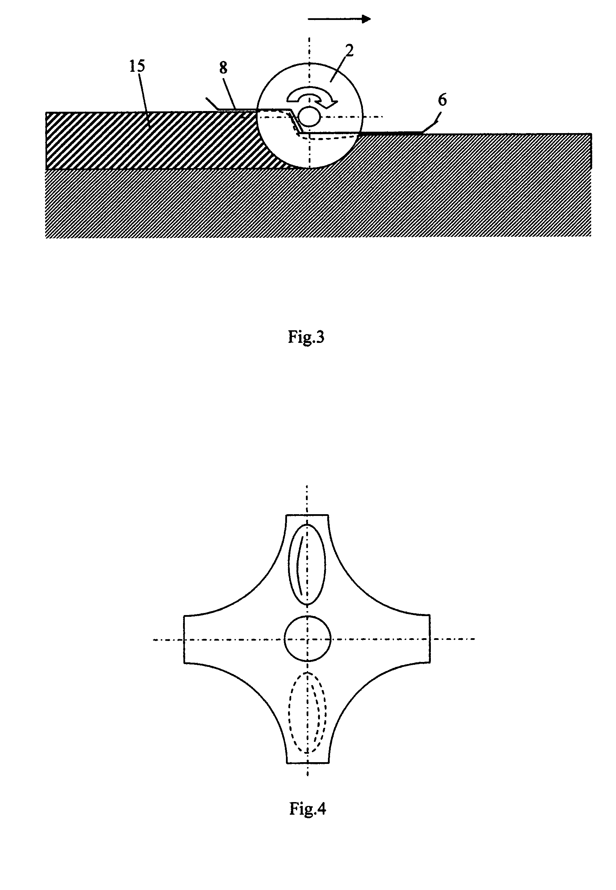

**Fig.4** zeigt eine Vier-Messerscheibe mit stärkerer Dicke oder seitlicher Ausformung.

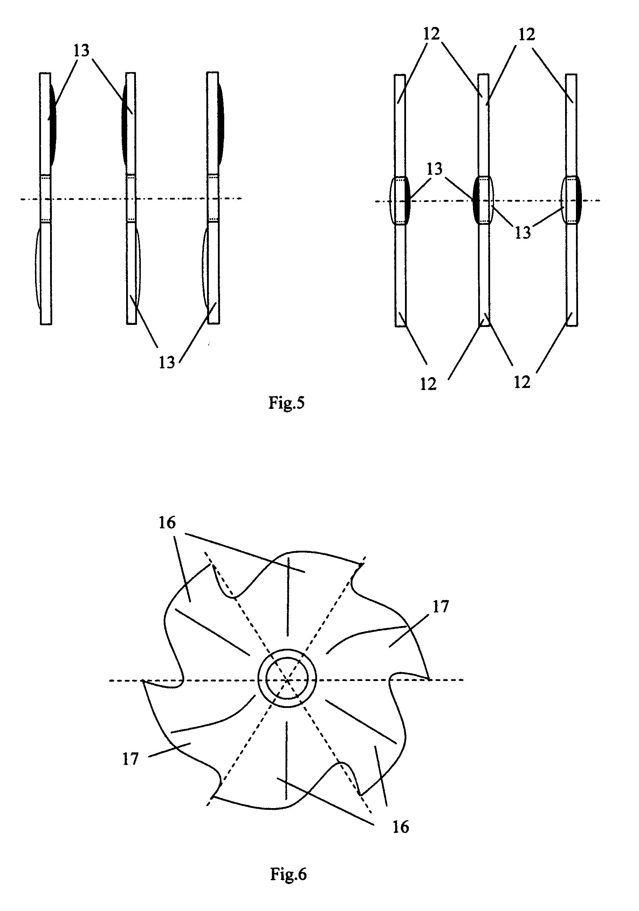

**Fig.5** zeigt unterschiedliche Profile zur Gestaltung von **Fig. 4.**

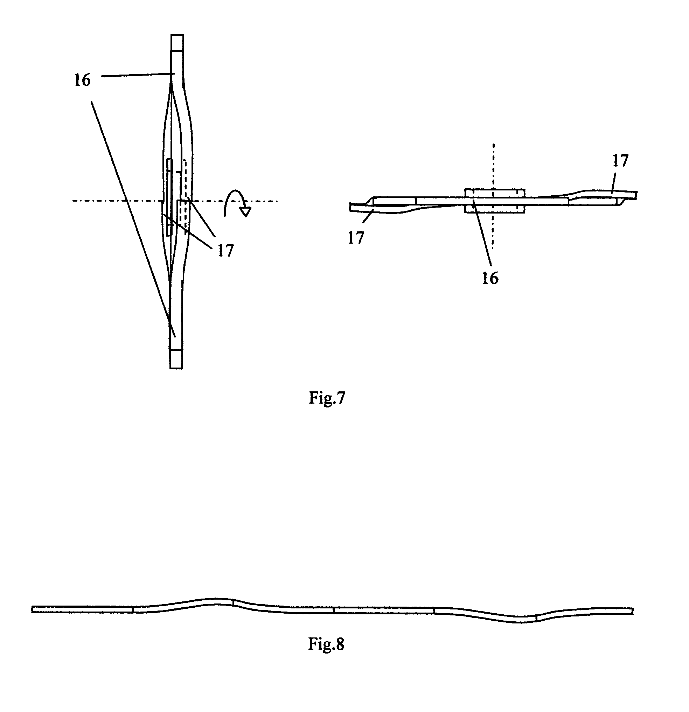

**Fig.6** zeigt ein Messer mit mehreren Schneidklingen wobei wieder das Profil der Scheibe, dargestellt in **Fig.7,** in bestimmten Scheibensegmenten in axialer Richtung verformt ist. **Fig. 8** zeigt den Klingenrand der Klinge aus **Fig.6** abgerollt auf 360°.

Das in **Fig.1** gezeigte Bodenbearbeitungsgerät stellt das prinzipielle Aussehen des erfindungsgemäßen Bodenlockerungsgerätes dar. Der Motor 1, der als Verbrennungskraft oder Elektromotor ausgeführt sein kann, stellt den Antrieb der Werkzeugwelle 14 über das Getriebe 3 dar. Auf dieser Welle sind nebeneinander die Schneidwerkzeuge 2 fest angebracht. Als Getriebe eignen sich Schneckengetriebe, Planetengetriebe, Stirnradgetriebe oder andere Getriebe kleiner Bauart. Die Ein- oder Auskupplung der Werkzeugachse erfolgt entweder mechanisch, hydraulisch oder pneumatisch, manuell oder automatisch gesteuert. Ebenso lässt sich diese Achse anheben oder absenken, um das Schneidwerkzeug (für den Transport) aus dem Boden zu heben oder in die Arbeitsposition abzusenken. Der Vorschub geschieht entweder direkt über Antriebsräder oder alternativ über die Schneidwerkzeuge. Bei letzterem kontrolliert der Benutzer den Vorschub manuell, ansonsten ist eine optimale Übersetzung zwischen den Rädern und der Werkzeugachse durch das Getriebe eingestellt. Der Führungsholm 4 dient zum Lenken und zum Wenden, und zur Vorschub-Hemmung durch den Benützer bei Geräten ohne Radantrieb. Der Führungsholm kann, höhenverstellbar und zum Transport oder Verstauung umlegbar ausgeführt sein. Während der Bearbeitung rotieren die Schneidmesser so, dass zunächst über parallele Schneidklingen(-Teile) Schnitte in den Boden erfolgen und das Bearbeitungsgerät dadurch bis zum Anschlag der durch die Verstelleinrichtung **5** verstellbaren Tiefenbegrenzung (Gleitschuh **6**) absinkt. Die speziell geformten Komprimierungsund Hubklingen(-Teile) der Schneidmesser pressen paarweise die Bodenabschnitte und heben diese anschließend an der Rücklaufseite der Klinge hoch. Der maximale Hub während dieses Vorganges wird durch die mittels Verstelleinrichtung 7 in der Höhe einstellbare Boden-Hubbegrenzung (Abstreifschuh 8) limitiert. Der so erhöhte bearbeitete Abschnitt wird dadurch in seiner Höhe vertikal positioniert. Diese Sequenz wiederholt sich zyklisch, Abschnitt für Abschnitt wird der Boden eingeschnitten, festgehalten und angehoben. Neben der Tiefenbegrenzung kann die Schnitt-Tiefe auch durch die Wahl des Schneidmesser-Durchmessers erfolgen. Die maximale Schnitt-Tiefe ist durch die Dimension der Schneidmesser und der Werkzeugwelle mit dem Getriebe sowie durch die Dimension der Antriebsräder gegeben. Um die Dimension der Schneidmesser möglichst klein zu halten wird ein Getriebe mit geringem Außendurchmesser eingesetzt. Optional sind ein bis vier Antriebs- oder Führungsräder 9 und eine Lüfterwalze 10 mit oberflächenbearbeitenden Messern oder Federn vorgesehen. Das Schutzblech 11 verhindert, dass tiefer liegende Steine oder Erdreich durch die Schneidwerkzeuge in die Luft gewirbelt werden.

Die Technik kann verglichen werden, mit einer Bearbeitung des Bodens durch 2 Spaten die von 2 Personen parallel in den Boden gestochen werden, die Spaten werden dann leicht nach außen gekippt, das Stück dazwischen vorsichtig angehoben. Dann werden die Spaten wieder parallel aus dem Boden gezogen, wobei ein leichter Druck von oben oder das Eigengewicht das Teilstück im Boden lässt.

Der Schnitt A-A' ist in **Fig.2** dargestellt und zeigt für die Funktion des Bodenlockerungsgerätes maßgebliche Profile von typischen Schneidwerkzeugen 2 aus Fig. 1. Hier sind zum leichteren Verständnis nur zwei Schneidmesser gezeigt. Grundsätzlich wird über die Arbeitsbreite eine ausreichende Anzahl von Schneidwerkzeugen angeordnet deren Form paarweise die gleichen Funktionen wie in diesem Beispiel durchführen. Abhängig davon, welche Teile der Schneidmesser im Boden sind, wird der Boden entweder eingeschnitten, gehalten oder angehoben. Der Vorschub erfolgt entweder durch Antriebsräder, den Schneidvorgang mit manueller Steuerung, oder durch externe Antriebs- oder Zugmaschinen, in der Weise, dass die Schneidwerkzeuge über die angetriebene Werkzeugwelle 14 durch Rotation, parallele Schnittlinien in den Boden schneiden. Die Rotationsrichtung der Schneidwerkzeuge verläuft in Vorschubrichtung, wobei die Klingen an der Vorderseite in den Boden einschneiden und an der Rücklaufseite wieder den Boden verlassen. Dabei wird an der hinteren Schneidwerkzeughälfte das Bodenmaterial fixiert und gegenüber der ursprünglichen Position angehoben. Der hier gezeigte Profilschnitt typischer Schneidwerkzeuge macht die unterschiedlichen Phasen deutlich. Die parallelen Klingenpaare 12 schneiden den Boden vor. Die Kompressions- und Hubklingenpaare 13 schleifen in den Schnittraum ein und komprimieren das Material zwischen den Schneidwerkzeugen, fixieren es und heben es hoch.

In Fig.3 ist das Ergebnis der durch die Erfindung vor und nach der erfolgten Bearbeitung des Bodens im Seitenprofil dargestellt. Der bearbeitete Boden 15 ist um einige Zentimeter angehoben, der Wurzelbereich ist gelockert, Verhärtungen, Komprimierungen sind beseitigt. Der Boden hat wieder mehr Raum. Nährstoffreiches Regen- oder Gießwasser kann wieder leichter in den Boden eindringen. Wurzelverdichtungen finden wieder mehr Lebensraum. Das gleiche gilt für Kleinlebewesen und Organismen, die für das biologische Gleichgewicht des Bodens mitverantwortlich sind. In **Fig.4** ist eine Vierklingen-Messerscheibe dargestellt. Die Druckausübung wird durch eine Distanzreduktion zwischen jeweils zwei Schneidwerkzeugen bewirkt. Dies erfolgt durch die spezielle Ausformung der Messerscheiben, wodurch eine gegensinnige Schlingerbewegung durch die Messer erfolgt, welche die oben beschriebenen Phasen zur Bodenlockerung ermöglichen. Ausbuchtungen wie hier gezeigt, Verformungen, Verdickungen, Krallen oder andere Aufsätze bewirken die seitliche Fixierung des zu hebenden Bodenteiles.

In **Fig.5** sind verschiedene Grundpositionen der Seitenansichten und damit das Zusammenwirken durch mehrere Messerscheibenformen laut **Fig.4** zu sehen. Der Schneidbereich der Schneidklingenpaare **12** ist exakt parallel, und der Kompressionsbereich entsteht durch die nach innen ausgeformten Kompressions- und Hubklingenpaare **13**.

Ein weiteres Beispiel der Schneidwerkzeuggestaltung ist in **Fig.6** und **Fig.7** gezeigt. Hier sind Schneidscheiben mit mehreren Messern gezeigt, wobei die Scheiben gegenüber herkömmlicher planparalleler Schneidscheiben in Sektoren ohne (**16**) und mit (**17**) Verformung in axialer Richtung eingeteilt sind. In **Fig.8** ist die Abrollkurve eines solchen Werkzeuges gezeigt. Wieder wird die Schnittfunktion durch den normal zur Achse ausgeführtem ebenen Schneidscheibenteil durchgeführt. Die Hubfunktion übernimmt die Kombination der zueinander geformten (verwölbten) Teile der paarweise angeordneten Schneidscheiben. Bei der Montage werden jeweils zwei Schneidscheiben mit den gebogenen Scheibenteilen zueinander nach innen ausgerichtet und auf der Antriebsachse fixiert, die symmetrischen Teile der Schneidscheiben müssen dann im gleichen Achsenwinkel liegen. Bei drei oder mehr verwendeten Scheiben, können im Umfang einander gegenüberliegende gegensinnige Verformungen im Mehrphasenbetrieb abwechselnd das Komprimieren und Heben des Materials in den Räumen zwischen den Scheiben bewirken.

Dadurch, dass die Schnittsegmente wesentlich weniger Hubwiderstand haben als die Bereiche rechts und links vom Bodenbearbeitungsgerät bewirken die Schub-spannungen im bearbeiteten Abschnitt einerseits und die Reibung zwischen Schneidwerkzeug und Bodenelement andererseits, eine Anhebung bis zum maximalen Ausmaß des halben Scheibendurchmessers. Die Hubhöhe wird durch die einstellbare Hubbegrenzung gewählt.

Der Boden wird streifenweise gehoben, wobei die Anschlüsse der einzelnen Bahnen über die Schneid-Spuren der vorangegangenen Bahnen erfolgen. Es wird also ab der 2. Bahn eines der Schneidwerkzeuge in der nächstliegenden vorangegangenen Schnittlinie geführt.

Optional angebrachte oder anbringbare Räder **9** erleichtern den Antrieb und auch den Transport zum Arbeitsbereich, ermöglichen eine leichtere Einschneidphase am Beginn der Bodenlockerung und ein leichteres Ausheben aus dem Boden am Ende einer Bahn sowie ein leichteres Wenden des Gerätes. Zusätzlich anbringbare Lüfterwalzen ermöglichen die Oberflächen-Vertikutierung und damit gleichzeitig mit der Tiefenlockerung und Tiefenlüftung eine Beseitigung des Rasenfilzes.

### Bezugszeichenliste

- 1: Motor
- 2: Schneidwerkzeug (Schneidscheibe, Messerbestückte Walze)
- 3: Getriebe
- 4: Führungsholm (Einhandbügel oder Doppelhandgriff)
- 5: Verstelleinrichtung zur Schneidtiefenbegrenzung
- 6: Gleitschuh
- 7: Verstelleinrichtung für Bodenhubbegrenzung
- 8: Hubbegrenzung (Abstreifschuh)
- 9: Antriebs- oder Führungsräder (optional 1,2,3 oder 4 Räder)
- 10: Lüfterwalze (optional)
- 11: Schutzblech
- 12: Schneidklingenpaar, oder -werkzeugabschnitt
- 13: Kompressions- und Hubklingenpaar oder - werkzeugabschnitt
- 14: Werkzeugwelle (Achse)
- 15: Gehobener, belüfteter und gelockerter Boden
- 16: Ebene Sektoren der Schneidscheibe
- 17: Verformte Sektoren der Schneidscheibe

## Patentansprüche

1. Bodenbearbeitungsgerät zur schonenden Lockerung von pflanzlich kultivierten Bodenflächen, wie Rasen, Zierrasen, Gärten, Wiesen und dergleichen mit mindestens zwei Schneidwerkzeugen (2) auf zumindest einer rotierenden Welle (14), welche in den Boden eine Mehrzahl von parallel zueinander verlaufende Schnitte einbringen, wobei die Schneidwerkzeuge (2) paarweise im Abstand voneinander rotierende Schneidmesser (12, 13) sind, deren Schnittflächen im Wesentlichen parallel zur Rotationsrichtung orientiert sind, **dadurch gekennzeichnet, dass** auf den einander zugekehrten Hauptflächen von einander benachbarten Schneidmessern (12, 13) jeweils einander zugeordnete Bodenkompressions-Erhebungen (13) oder dergleichen und/oder durch Verformung oder dergleichen gestaltete jeweils einander zugeordnete Bodenkompressions-Aufwölbungen (13) oder dergleichen angeordnet sind, und/oder dass einander benachbarte Schneidmesser jeweils einander zugeordnete Bodenkompressions-Abschnitte (13, 17) mit zur übrigen Oberfläche der Messer-Hauptflächen unterschiedliche Oberflächen-Beschaffenheit und/oder Reibungswirkung aufweisen.

2. Gerät nach Anspruch 1, **dadurch gekennzeichnet, dass** ein Motor (1) zum Antrieb der Werkzeugwelle (14) vorgesehen ist, auf welcher Schneidwerkzeuge (2) angebracht sind oder zum Antrieb über ein Getriebe (3).

3. Gerät nach mindestens einem der Ansprüche 1 bis 2, **dadurch gekennzeichnet, dass** zwischen Motor (1) und Werkzeug-Welle (14) ein mechanisches oder ein hydraulisches Getriebe (3) angeordnet ist.

4. Gerät nach mindestens einem der Ansprüche von 1 bis 3, **dadurch gekennzeichnet, dass** es eine Zapfwelle und eine Anhängevorrichtung zum Anschluss an eine Zugmaschine aufweist.

5. Gerät nach mindestens einem der Ansprüche von 1 bis 4, **dadurch gekennzeichnet, dass** eine Kette, ein Zahnriemen oder Bandriemen zum Antrieb der Werkzeugwelle (14) vorgesehen ist.

6. Gerät nach mindestens einem der Ansprüche von 1 bis 5, **dadurch gekennzeichnet, dass** ein Gleitschuh (6) vorzugsweise mit Verstelleinrichtung (5) zur Schneidtiefenbegrenzung unterhalb der Werkzeugwelle (14) angeordnet ist, welcher vorzugsweise ein in Vorschubrichtung vorne aufgebogenes, parallel zum Boden angeordnetes Blech ist, und im Werkzeugbereich Schlitze aufweist und welches knapp hinter der Werkzeugwelle (14) endet.

7. Gerät nach mindestens einem der Ansprüche von 1 bis 6, **dadurch gekennzeichnet, dass** ein Abstreifschuh (8) vorzugsweise mit Vorrichtung und Verstelleinrichtung (7) zur Hubbegrenzung hinter der Werkzeugwelle (14) angeordnet ist, welches vorzugsweise ein in Vorschubrichtung vorne geschlitztes parallel zum Boden angeordnetes Blech ist.

8. Gerät nach mindestens einem der Ansprüche 1 bis 7, **dadurch gekennzeichnet, dass** es Führungsräder oder Antriebsräder (9) aufweist, die vorzugsweise lösbar angeordnet sind.

9. Gerät nach mindestes einem der Ansprüche 1 bis 8, **dadurch gekennzeichnet, dass** zur Positionsänderung der Werkzeugwelle (14) eine mechanische, pneumatische, oder hydraulische Hub- und Senkeinrichtung dient, welche lösbare Fixiereinrichtungen für die Arbeitsposition und die Ruhe- oder Transportposition aufweist.

10. Für den rotierenden Einsatz vorgesehene Schneidwerkzeuge (2) zur Bearbeitung von Böden durch Geräte nach Anspruch 1 oder zum Einbau in Bodenbearbeitungsgeräte, zur Funktionsänderung oder - erweiterung von Bodenbearbeitungsgeräten wie Aerifizierern, Vertikutierern, Motorhacken, Motorsensen, Rasenmähern, Eggen, Traktorzubehörteilen und dergleichen, **dadurch gekennzeichnet, dass** sie auf den Hauptflächen für die paarweise Anordnung und Ausrichtung (13, 17) Abschnitte mit Profil-Verbreiterungen, Verformungen, Aufsätze, Krallen und dergleichen und/oder Abschnitte (13, 17) mit zur übrigen Oberfläche der Messer-Hauptflächen unterschiedliche Oberflächenbeschaffenheit und/oder Reibungswirkung aufweisen.
